# FASCICULE DE BREVET EUROPEEN

(11) **EP 1 883 594 B1**
(45) Date de publication et mention de la délivrance du brevet: **28.07.2010**
(21) Numéro de dépôt: 06764675.2
(22) Date de dépôt: 23.05.2006
(51) Int. Cl.: B65G 51/03, B29C 49/42

(54) **ELEMENT DE RAIL DE CONVOYAGE D'OBJETS EN POSITION SUSPENDUE ET DISPOSITIF D'ALIMENTATION EN PREFORMES COMPRENANT UN TEL ELEMENT**
SCHIENENELEMENT ZUR FÖRDERUNG HÄNGENDER OBJEKTE, VORFORMENZUFUHRVORRICHTUNG MIT EINEM SOLCHEN ELEMENT
RAIL ELEMENT FOR CONVEYING SUSPENDED OBJECTS, PREFORM-SUPPLY DEVICE COMPRISING ONE SUCH ELEMENT

(30) Priorité: 24.05.2005 FR 0505200
(43) Date de publication de la demande: 06.02.2008
(73) Titulaire: Sidel Participations, 76930 Octeville sur Mer (FR)
(72) Inventeur: LEMAISTRE, Eric, Sidel Participations, F-76930 Octeville-Sur-Mer (FR); CHARPENTIER, Alain, Sidel Participations, F-76930 Octeville-Sur-Mer (FR); SAVARY, Cyril, Sidel Participations, F-76930 Octeville-Sur-Mer (FR)
(74) Mandataire: Cabinet Plasseraud
(86) Numéro de dépôt international: PCT/FR2006/001182
(87) Numéro de publication internationale: WO 2006/125911

(56) Documents cités:
- FR-A- 2 876 363
- US-A- 5 516 239
- US-A- 6 024 518
- US-A1- 2003 094 352
- US-A1- 2003 164 280

## Description

La présente invention concerne un élément de rail de convoyage d'objets en position suspendue selon le préambule de la revendication 1, et un dispositif d'alimentation en préformes comprenant un tel élément.

Bien que plus particulièrement destinée au transport de préformes, l'invention pourra être utilisée pour le transport de bouteilles, flacons ou objets similaires.

L'invention sera plus particulièrement décrite dans le cadre de son application à une installation de soufflage de récipients dans laquelle le récipient est obtenu par soufflage de préformes précédemment réalisé par injection, c'est à dire que l'on procède au moulage par injection d'une préforme. Cette préforme comporte un corps sensiblement tubulaire, qui est fermé à l'une de ses extrémités axiales. Son autre extrémité présente, dès cette opération de moulage par injection, la forme définitive du col du récipient.

Généralement, le col du récipient comporte un filetage et, à sa base, une collerette de support annulaire qui s'étend radialement vers l'extérieur.

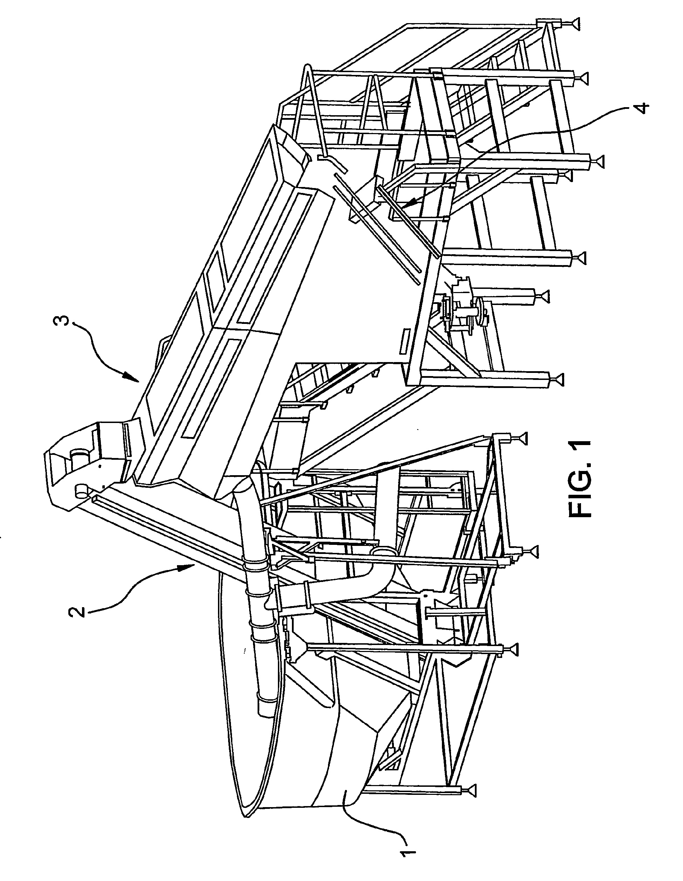

A la figure 1 des dessins annexés est illustré, en perspective, un ensemble d'alimentation en préformes situé en amont d'une installation de soufflage. Les préformes sont déversées en vrac dans un bac 1. Elles sont prélevées de ce bac par un tapis 2 élévateur qui vient déverser les préformes selon un rythme prédéterminé à l'extrémité supérieure d'une trémie 3 d'alignement.

Cette trémie 3 d'alignement comporte généralement deux rouleaux d'alignement qui sont inclinés par rapport à l'horizontale et qui sont sensiblement parallèles l'un à l'autre.

Les deux rouleaux sont entraînés en rotation selon des sens opposés et sont écartés l'un de l'autre de manière à laisser subsister entre eux un intervalle.

Cet intervalle est légèrement supérieur à la dimension du corps des préformes et est inférieur à la dimension de la collerette de support des préformes.

Sous l'effet de la gravité, les préformes sont forcées vers le fond de la trémie où se trouvent les deux rouleaux.

Le mouvement de rotation des rouleaux et leur inclinaison par rapport à l'horizontale assurent le placement des préformes les unes derrière les autres, suspendues par l'appui de leurs collerettes sur les rouleaux.

Les préformes glissent le long de l'axe des rouleaux, vers le fond de la trémie où elles sont récupérées dans un rail 4 d'alimentation lui-même relié à la machine de soufflage, non représentée.

Les préformes étant déversées en vrac dans le bac 1, il est possible que des préformes ne soient pas correctement placées entre les rouleaux de la trémie 3 d'alignement.

Bien entendu, les préformes mal orientées ne peuvent être introduites dans le rail 4 d'alimentation qui conduit à la machine de soufflage.

Il en va de même des préformes emboîtées l'une dans l'autre, même dans le cas où, dans cet emboîtement, la préforme inférieure est correctement orientée.

Aussi, des moyens d'éjection des préformes mal orientées ou emboîtées l'une dans l'autre sont généralement prévues pour éviter que des préformes dans une telle configuration ne rejoignent le rail d'alimentation.

Le rail 4 d'alimentation comporte typiquement une partie rectiligne et une partie courbée, la courbure étant généralement en partie dans le plan, c'est-à-dire que la courbure est située dans un même plan et en partie hors plan, c'est-à-dire qu'il ne peut être défini un seul plan dans lequel reste la courbure, formant ainsi de manière générale un segment hélicoïdal pouvant être composé sur au moins une partie de la courbure d'un segment à courbure planaire.

La formation d'un tronçon de segment à courbure hélicoïdale avec une partie de la courbure hors plan et/ou une partie de la courbure dans le plan permet de maintenir une pente d'écoulement par gravité des préformes.

La courbure dans le plan et hors plan, à savoir la formation d'un tronçon de segment à courbure planaire (située dans un même plan) et/ou un tronçon de segment à courbure hors d'un même plan, permet de faire pénétrer les préformes dans la machine de soufflage, sans que l'ensemble représenté en figure 1 ne gêne les interventions et les opérations de maintenance sur la machine de soufflage, l'ensemble de l'installation restant toutefois compact.

Il est en effet souhaité que l'ensemble des organes de la machine de soufflage reste facilement accessible, par ouverture de portes, enlèvement des portes et capotages.

La mise en place de sections courbes dans le rail 4 d'alimentation permet de placer au mieux l'ensemble représenté en figure 1 par rapport à la machine de soufflage pour minimiser l'espace global d'occupation d'une machine de soufflage de récipients.

A titre d'exemple, les rouleaux d'alignement de la trémie 3 sont sensiblement parallèles au four linéaire de conditionnement thermique des préformes.

Dans le rail 4 d'alimentation, les guides sur lesquels sont suspendues les préformes sont formés de tronçons d'appui et de glissement des préformes.

La partie coudée du rail 4 d'alimentation, courbée dans le plan et le plus souvent hors plan, c'est-à-dire formant un tronçon de segment à courbure planaire (située dans un même plan) et/ou un tronçon de segment à courbure hors d'un même plan, est un passage délicat pour les préformes. Tout doit être mis en oeuvre pour éviter que les préformes ne restent bloquées dans cette courbe ou partie coudée.

Pour pouvoir acheminer par gravité des préformes de tailles différentes, il est souhaitable que le rail de guidage soit pourvu d'une paire de glissières d'écartement modifiable permettant ainsi d'adapter rapidement l'écartement entre les glissières au diamètre du col des préformes.

Pour pouvoir modifier l'écartement des deux glissières d'un rail de convoyage d'objets suspendus tels que des bouteilles, il a été proposé de placer des actionneurs permettant le déplacement des glissières sensiblement perpendiculairement à la direction de déplacement des bouteilles.

Néanmoins, pour les sections courbes de convoyage, la présence d'actionneurs est relativement complexe à mettre en oeuvre, car la modification de l'ouverture du rail de convoyage doit être effectuée à rayon de courbure contrôlé, et sans modification de la longueur des glissières vers l'intérieur ou l'extérieur de la courbe.

De sorte que, dans les dispositifs existants, l'amplitude de réglage des glissières ou « guides sous col » est assez faible.

Le document CA 2 419 562 au nom de Sidel Canada Inc divulgue un dispositif de transport pneumatique courbe réglable de bouteilles. Ce dispositif, fonctionnellement satisfaisant, s'avère de montage complexe et coûteux.

Compte tenu des difficultés mentionnées ci-dessus, en pratique, faute d'une solution techniquement et économiquement plus satisfaisante, les portions coudées des rails d'alimentation de préformes sont actuellement purement et simplement intégralement changées lorsque l'écartement des glissières doit être modifié.

Et ce, en dépit du temps assez long nécessaire à une telle opération, temps pendant lequel la machine de formation des récipients ne peut fonctionner, d'où une diminution de la rentabilité de la machine.

Le document US 2003/0164280 A1 divulgue un élément de rail de convoyage d'objets selon le préambule de la revendication 1, un tronçon courbe de convoyeur pour le transport d'articles guidés entre deux rails de guidage. Ce tronçon courbe de convoyeur comporte des moyens de réglage de l'écartement entre les deux rails de guidage. A cette fin, au moins un rail de guidage est élastiquement déformable et les moyens de réglage sont conçus pour déplacer et déformer ce rail élastiquement déformable de façon à lui conférer une courbure donnée qui dépend de sa position. Toutefois, ce tronçon courbe de convoyeur n'est pas hélicoïdal et la déformation du rail élastiquement déformable s'effectue à plat et non pas dans l'espace.

Il serait donc particulièrement intéressant de prévoir des moyens permettant de modifier l'écartement des glissières sur des tronçons de rail courbe en un minimum de temps et avec des opérations de maintenance simples à réaliser.

De plus, il est nécessaire de prévoir un tronçon de rail à courbure hélicoïdale pour chaque type, en particulier pour chaque diamètre sous collerette, de préformes que l'on souhaite transporter, ce qui nécessite des emplacements de stockage conséquents. Il serait donc avantageux de réaliser des moyens de modification de l'écartement des glissières non volumineux ainsi que facilement stockables et transportables.

Par ailleurs, puisque les tronçons de rail courbe devant être modifiés pour chaque écartement donné sont constitués d'un châssis fixe sur lequel plusieurs éléments sont soudés les uns aux autres, ils sont relativement complexes à usiner et donc relativement onéreux ; de plus ils sont encombrants et, de ce fait, assez difficiles à mettre en place. Aussi, l'utilisateur d'une machine de soufflage doit-il prévoir suffisamment à l'avance quand il souhaite modifier l'écartement des glissières ainsi que la logistique nécessaire, sous peine de mise à l'arrêt de sa machine tant que le nouveau châssis n'aura pas été installé. Ainsi, il serait donc intéressant de réaliser des moyens moins encombrants qui puissent être plus rapidement et facilement mis en place.

De plus, quand les récipients à transporter sur les glissières sont des récipients avec une collerette de support annulaire, laquelle collerette surmonte une partie de corps tronconique, les glissières doivent parfois être taillées en pointe de manière à pouvoir bien s'engager sous la collerette tout en n'étant pas bloquées par ladite partie tronconique de corps située sous la collerette. Il serait donc particulièrement avantageux d'obtenir des glissières suffisamment fines permettant de s'engager sous tout type de collerette.

La demanderesse s'est attachée à résoudre les problèmes mentionnés ci-dessus.

Pour ce faire, afin de permettre une modification rapide de l'écartement entre deux glissières sur lesquelles doit venir en appui un objet à convoyer, la présente invention porte sur un élément de rail de convoyage d'objets en position suspendue, notamment de récipients tels que bouteilles ou préformes, selon le préambule de la revendication 1, lequel élément de rail de convoyage se caractérise, étant agencé conformément à l'invention, par les dispositions énoncées dans la partie caractérisante de la revendication 1.

Afin de permettre la solidarisation du châssis avec les glissières, ladite au moins une glissière est logée dans des moyens de support prévus sur le châssis.

De manière à permettre l'utilisation d'un même châssis pour plusieurs paires de glissières avec des écartements différents entre elles, ladite au moins une glissière est au moins partiellement de forme complémentaire auxdits moyens support. En effet, si les moyens support étaient juste de forme complémentaire à la glissière, alors il ne serait pas possible d'utiliser une glissière avec une largeur plus étroite sur un même châssis. Il serait alors nécessaire de remplacer le châssis, ce qui est un des inconvénients auxquels l'invention remédie.

De manière avantageuse, afin de caler en position la glissière et d'éviter son déplacement lors du convoyage des objets, les moyens support comprennent un décrochement prévu dans au moins une branche du rail de convoyage.

Afin de permettre le glissement des objets convoyés sur les glissières sans qu'ils ne frottent contre le châssis, la surface latérale à courbure interne de la glissière est en saillie par rapport à au moins une branche respective du rail de guidage.

Afin de fixer de manière amovible les glissières sur le châssis et pouvoir les remplacer rapidement, ladite au moins une glissière est fixée sur le châssis à l'aide de moyens de vissage.

De manière à accélérer le débit des objets convoyés sur l'élément de rail de convoyage selon l'invention, ladite au moins une glissière est constituée par un profilé en un matériau favorisant le glissement, tel que du métal chargé de PTFE.

Afin d'éviter la mise en contact de la partie de corps de l'objet convoyé avec le châssis et un éventuel blocage, l'élément de rail de convoyage selon l'invention comprend des moyens aptes à limiter le balancement latéral des objets convoyés.

De manière avantageuse, les moyens aptes à limiter le balancement latéral des objets convoyés comprennent deux corps élancés, notamment des tubes cintrés vrillés, placés sous les glissières, et l'élément de rail de convoyage comprend des moyens aptes à permettre de faire varier l'écartement entre lesdits corps élancés et/ou la distance entre lesdits corps élancés et les glissières.

Afin d'éviter un mouvement de balancement longitudinal, c'est-à-dire d'avant en arrière, des objets convoyés lors de leur convoyage, l'élément de rail de convoyage comprend des moyens aptes à assurer le maintien des objets convoyés en appui sur les glissières.

Dans un mode de réalisation particulier, le châssis comporte une bande supérieure placée sensiblement à l'aplomb du couloir de convoyage et définissant un tronçon courbe d'appui pour les extrémités supérieures des objets à convoyer, notamment buvant de récipients.

Afin d'améliorer le glissement des objets convoyés sur les glissières, celles-ci comportent des bords en vis-à-vis munis de gorge dans laquelle une bande de glissement est montée de manière amovible, notamment par encliquetage.

De manière avantageuse, selon un aspect préférentiel de l'application de l'élément de rail de convoyage selon l'invention, la présente invention porte également sur un dispositif d'alimentation en préformes d'une machine de soufflage, comprenant un élément de rail de convoyage présentant les caractéristiques telles que précédemment mentionnées et un système de démêlage des préformes, caractérisé en ce que cet élément de rail de convoyage relie la sortie du système de démêlage à une portion rectiligne de rail de convoyage.

D'autres objets et avantages de l'invention apparaîtront au cours de la description suivante de modes de réalisation, description qui va être effectuée en se référant aux dessins annexés dans lesquels :
- la figure 1 est une vue d'un ensemble d'alimentation de préformes qui est pourvu d'un coude ou élément de rail selon l'invention ;
- la figure 2 est une vue en perspective d'un coude ou élément de rail selon un mode de mise en oeuvre de l'invention ;

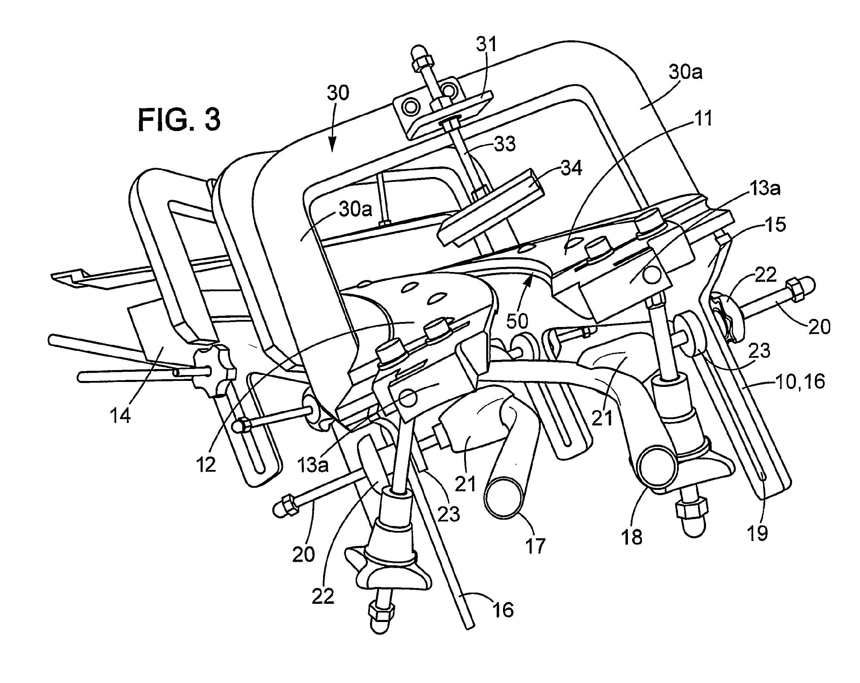

- la figure 3 est une vue latérale du coude représenté en figure 2 ;
- la figure 4 est une vue supérieure d'une paire de bandes avant montage et conformation en glissières sur un élément de rail selon l'invention, et
- la figure 5 est une vue en perspective frontale d'une paire de bandes après montage et conformation en glissières sur un élément de rail selon l'invention, le tronçon de courbe n'étant pas représenté sur la figure 5 par mesure de clarté.

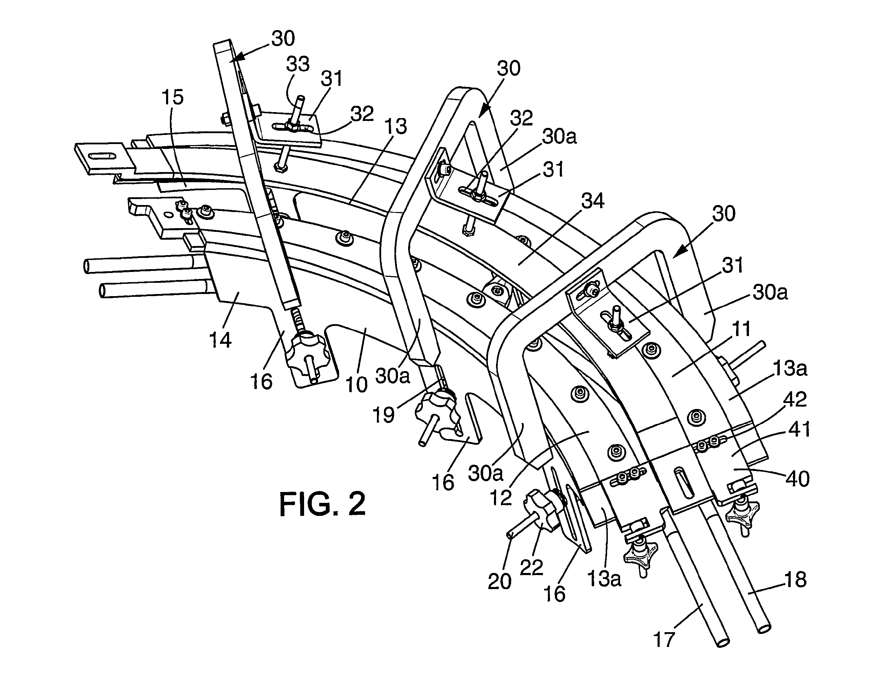

L'élément de rail de convoyage selon l'invention représenté en figure 2 comprend un châssis 10 supportant deux glissières 11, 12 amovibles délimitant un couloir 13 de convoyage pour des objets suspendus sur ces deux glissières 11, 12.

Les glissières 11, 12 forment un rail de convoyage, par exemple un rail d'alimentation en préformes pour une machine de soufflage de récipients (non représentée sur les figures mais de type connu en soi).

Dans le mode de réalisation des figures, ce convoyage est effectué par gravité : les objets tels que des préformes ou des bouteilles sont suspendus sur les glissières 11, 12 et s'écoulent par gravité dans le couloir 13 de convoyage, les glissières 11, 12 étant courbées dans le plan et/ou hors plan sur le châssis 10, de sorte à former un tronçon en hélice ou hélicoïdal.

Il est entendu toutefois que l'invention pourra être mise en oeuvre pour des rails de convoyage dans lesquels les objets convoyés sont propulsés par un fluide, par exemple de l'air.

Il est également entendu que l'invention pourra être mise en oeuvre pour des rails de convoyage dans lesquels il existe uniquement un coude ou élément de rail dans le plan.

Les objets convoyés (non représentés) sont pourvus de saillies permettant leur appui latéral sur les glissières 11, 12.

Par exemple, les objets sont des préformes ou des bouteilles pourvues d'une saillie annulaire dite collerette, située sous le col (ou goulot). Ainsi, les glissières 11, 12, placées de part et d'autre du goulot des bouteilles ou préformes, les guident et les supportent, raison pour laquelle ces glissières sont dénommées « guides sous col », par l'homme du métier.

L'écartement entre les glissières 11, 12 est le plus précis possible et constant, la tolérance pour les écarts entre glissières 11, 12 étant de l'ordre du dixième de millimètre, voire deux à trois dixièmes.

Le châssis 10 comporte deux parois ou faces 14, 15 latérales pourvues de pattes 16.

Ces pattes 16 supportent des moyens de guidage du corps des objets convoyés.

Ces moyens de guidage ont pour fonction d'éviter ou tout au moins de limiter les mouvements de balancement latéral des objets convoyés. Ils comprennent deux corps élancés, notamment des tubes 17, 18 cintrés vrillés, placés sous les glissières 11, 12, dont l'écartement est sensiblement constant et légèrement supérieur au diamètre du corps de l'objet suspendu.

Avantageusement, l'élément de rail comprend des moyens de réglage aptes à faire varier l'écartement entre lesdits corps élancés et/ou la distance entre les corps élancés et les glissières 11, 12. Plus précisément, l'écartement entre les tubes 17, 18 ainsi que la distance séparant ces tubes 17, 18 de la zone d'appui formée par les glissières 11, 12 est réglable.

A cette fin, les pattes 16 sont chacune pourvue d'une lumière 19 oblongue, au travers de laquelle passe une tige 20. Ainsi, le châssis 10 comprend deux faces 14, 15 latérales, de part et d'autre du couloir 13 de convoyage, avec des lumières 19 disposées à distances prédéfinies sur ces faces 14, 15 latérales, au moins un des deux corps élancés étant monté solidaire de tiges 20 filetées qui traversent les lumières 19.

Chaque tige 20 est pourvue à une première partie extrême, d'un embout 21 de support d'un tube 17, 18. Par exemple, cet embout 21 est vissé sur la tige 20 et est pourvu d'une réservation sur laquelle un tube 17, 18 vient s'encliqueter.

Chaque tige 20 est pourvue d'un filetage et comporte, à sa deuxième partie extrême, une molette 22. Ainsi, chaque tige 20 filetée est pourvue de molettes 22 dont le vissage ou le dévissage permet de faire varier la distance entre le corps élancé et une face 14, 15 latérale du châssis 10.

Chaque molette 22 est en appui contre une face d'une patte 16 du châssis 10 et une bague 23 de serrage, montée vissée sur la tige 20, est en appui contre l'autre face de cette patte 16. De manière avantageuse, le vissage ou le dévissage de la molette 22 et de la bague 23, de part et d'autre de la lumière 19 de montage de la tige 20, permet de faire varier et de fixer la distance entre le corps élancé et une face 14, 15 latérale du châssis 10.

Plus précisément, les manoeuvres de vissage ou de dévissage de la molette 22 et de la bague 23 permettent de modifier la distance entre un tube 17, 18 et les pattes 16 du châssis 10, et ainsi de modifier l'écartement entre les tubes 17, 18.

Il est également possible de faire varier la position des tiges 20 dans les lumières 19 des pattes 16, et ainsi de modifier la distance entre tubes 17, 18 d'une part et glissières 11, 12 d'autre part.

La position, sur le châssis 10, d'un tube 17, 18 de guidage peut être modifiée indépendamment de la position de l'autre tube 17, 18. Il est ainsi possible de convoyer des objets de formes variées (récipients non cylindriques par exemple).

Le châssis 10 porte des arceaux 30 en forme de U à ouverture tournée vers les glissières 11, 12. Dans la réalisation représentée, ces arceaux 30 comportent des bras 30a sensiblement placés dans l'alignement des lumières 19 des pattes 16.

Sur chaque arceau 30 est montée une cornière 31, par exemple par vissage. Cette cornière est pourvue d'un trou 32 oblong de passage d'une tige 33 filetée.

Cette tige filetée est solidaire d'une bande 34 sensiblement placée à l'aplomb du couloir 13 de convoyage. Dans la réalisation représentée, cette bande 34 est courbée dans le plan et/ou hors plan d'une manière sensiblement identique aux courbures des glissières 11, 12.

Autrement dit, le châssis 10 comporte des arceaux 30 de montage d'une bande 34 supérieure définissant un tronçon courbe d'appui pour les extrémités supérieures des objets à convoyer, notamment le buvant de bouteilles ou de cols de préformes, cette bande 34 supérieure étant placée sensiblement à l'aplomb du couloir 13 de convoyage délimité latéralement par les glissières 11, 12.

Les parties supérieures des objets convoyés, par exemple les buvants des bouteilles ou des cols de préformes, viennent en appui glissant sur la face inférieure de cette bande 34 permettant ainsi d'éviter un mouvement de balancement longitudinal, c'est-à-dire d'avant en arrière des objets convoyés lors de leur déplacement, la bande 34 exerçant préférentiellement une force de poussée pour plaquer les éléments en saillie des objets convoyés en appui contre les glissières 11, 12. De ce fait, l'élément de rail selon l'invention comprend des moyens aptes à assurer le maintien des objets convoyés en appui sur les glissières 11, 12.

Le réglage de la position de la bande 34, par rapport aux arceaux 30, et donc par rapport aux glissières 11, 12, est obtenu au moyen d'écrous ou de molettes montées sur les tiges 33 filetées.

Il est ainsi possible d'adapter le rail à différentes hauteurs de cols de bouteilles ou de préformes. De cette manière, l'élément de rail comprend des moyens permettant de faire varier la distance entre la bande 34 supérieure d'appui et les glissières 11, 12. Plus précisément, les arceaux 30 sont pourvus d'une pièce en forme de cornière 31, une tige 33 filetée solidaire de la bande 34 supérieure passant au travers d'un trou 32 oblong de cette cornière 31, cette tige 33 étant pourvue d'une molette dont le vissage/dévissage permet de faire varier la distance entre la bande 34 supérieure et les glissières 11, 12. La bande 34 supérieure définit ainsi un tronçon courbe monté cintré sur les arceaux 30 du châssis 10 et est constituée par un profilé formé par ou revêtu d'un matériau favorisant le glissement tel que le PTFE.

Selon un mode de réalisation, les glissières 11, 12 comportent, sur leur surface courbée latérale intérieure 11b, 12b, une gorge dans laquelle un joint ou une bande de glissement est montée de manière amovible, notamment par encliquetage.

De manière avantageuse, les glissières 11, 12 sont montées de manière amovible sur le châssis 10, par exemple par vissage.

Selon un mode de réalisation préférentiel, les glissières 11, 12 sont réalisées à partir de la découpe laser ou à partir de tout autre type de moyens de découpe connus en soi d'une plaque ou d'une bande.

De sorte à favoriser le glissement entre objets convoyés et glissières, les glissières 11, 12 sont avantageusement réalisées ou revêtues par une bande de matière polymère telle que PTFE. Avantageusement, au moins une glissière 11, 12 est un profilé formé par ou revêtu d'un matériau favorisant le glissement. Ainsi, le matériau de la glissière 11, 12 est tout type de matériau à faible coefficient de frottement et favorisant le glissement, par exemple du métal, du PTFE, des matières synthétiques (Téflon®) ou du métal chargé en PTFE tel que de l'aluminium chargé en PTFE.

Avantageusement, les glissières 11, 12 sont réalisées en un matériau qui est apte à être mis en hélice manuellement lors de la pose des glissières 11, 12, par exemple par vissage, sur le châssis 10.

Le réglage de l'écartement entre les glissières 11, 12 peut ainsi être obtenu d'une manière simple et économique.

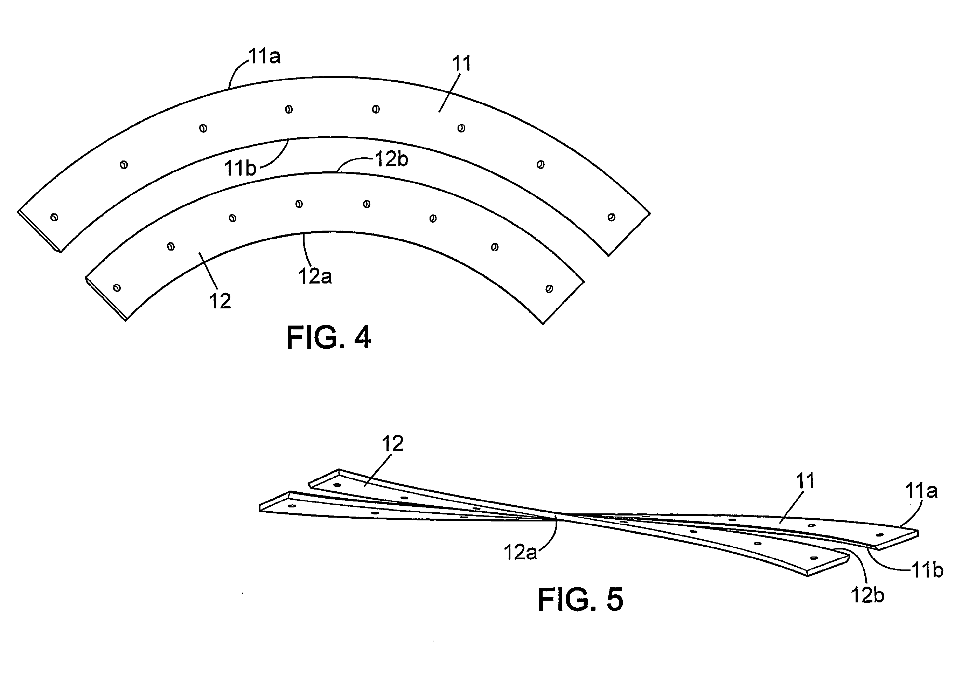

En effet, comme cela apparaît de la figure 4, les glissières 11, 12 sont usinées sous la forme d'une paire de bandes plates dont on a au préalable déterminé la courbure et l'écartement donné constant entre les glissières 11, 12 pour un diamètre de récipient convoyé donné.

Ainsi, avant montage sur le châssis 10, les glissières 11, 12 se présentent sous la forme d'une paire de bandes plates avec une courbure déterminée calculée pour permettre la mise en hélice des glissières 11, 12 sur le châssis 10 hélicoïdal.

Afin de permettre le remplacement rapide des glissières 11, 12 en fonction de l'écartement entre elles, le châssis 10 est commun à des paires de glissières 11, 12 présentant des écartements différents pour le convoyage de récipients avec des diamètres différents.

Le châssis 10 selon l'invention présente en effet des moyens 50 de support dans lesquels peuvent être logées et fixées les glissières 11, 12, chaque glissière 11, 12 étant au moins de forme partiellement complémentaire aux moyens 50 de support.

Les moyens 50 de support sont avantageusement sous la forme d'un décrochement ou espace dans chaque branche 13a du rail de convoyage et sont de forme complémentaire à la surface latérale à courbure externe 11a, 12a de chaque glissière 11, 12.

Il est ainsi possible de loger chaque glissière 11, 12 partiellement sur ces moyens 50 de support, la surface latérale à courbure interne 11b, 12b de chaque glissière 11, 12 étant en saillie de chaque branche 13a du rail de convoyage de manière à supporter les éléments en saillie, tel que la collerette d'une préforme, des objets convoyés.

Il est dans les compétences de l'homme de l'art de calculer au préalable quelle doit être la courbure des bandes planes lors de leur découpe pour que celles-ci puissent se mettre en hélice avec un écartement constant entre elles lors de leur fixation amovible sur le châssis 10 fixe formant le tronçon de convoyage à courbure hélicoïdale.

De cette manière, plutôt que de procéder au changement de la totalité du tronçon de rail, il est seulement nécessaire de changer les glissières 11, 12 qui sont réalisées à partir d'une bande plane de matière, et mises en hélice au moment du montage sur le châssis 10 en fonction des courbures dans le plan et/ou hors plan souhaitées pour le tronçon.

Avantageusement, les glissières 11, 12 en bandes sont fixées de manière amovible sur le châssis 10 à l'aide de moyens de vissage de type vis régulièrement répartis sur la longueur de la glissière 11, 12. Néanmoins, d'autres moyens de fixation sont envisageables tels que des systèmes à pression.

Un réglage fin de l'écartement entre deux glissières 11, 12 peut être obtenu par vissage des glissières 11, 12 au travers de trous de montage oblongs.

De manière générale, l'invention porte ainsi sur un élément de rail de convoyage d'objets en position suspendue, tels que bouteilles ou préformes, cet élément comprenant deux glissières 11, 12 écartées d'une distance prédéfinie, ces glissières 11, 12 formant surfaces d'appui latérales pour les objets convoyés dans un couloir de convoyage, notamment des guides sous col de préformes, caractérisé en ce qu'il définit un tronçon de convoyage à courbure hélicoïdale et comprend un châssis 10 sur lequel les glissières 11, 12 sont mises en hélice, au moins une glissière 11, 12 étant une bande plane amovible dudit châssis 10.

De même, un bon raccordement entre tronçons pourra être assuré par le biais de moyens 40 d'aboutage réglable. Ces moyens 40 d'aboutage réglable comportent une pièce 41 de liaison entre tronçons, cette pièce étant pourvue à sa première partie extrême, d'un trou 42 oblong d'assemblage par vissage à un premier tronçon, cette pièce comprenant à sa deuxième partie extrême une molette 43 de montage à un deuxième tronçon de rail, étant entendu que le châssis 10 n'est pas désolidarisé des autres tronçons de rail lors de la modification de l'écartement entre les glissières 11, 12.

La présente invention s'applique plus particulièrement à un dispositif d'alimentation en préformes d'une machine de soufflage comprenant un élément de rail selon l'invention et un système de démêlage ou trémie 3 d'alignement, l'élément de rail reliant la sortie du système de démêlage à une portion rectiligne de rail d'alimentation en préformes.

## Revendications

1. Elément de rail de convoyage d'objets en position suspendue, notamment de récipients tels que bouteilles ou préformes, cet élément de rail de convoyage comprenant un châssis (10) supportant deux glissières (11, 12) qui sont écartées d'une distance prédéfinie délimitant un couloir (13) de convoyage et qui forment des surfaces d'appui latérales pour les objets convoyés dans ledit couloir de convoyage, notamment des guides sous col de récipients, **caractérisé en ce que** ledit châssis (10) supporte lesdites glissières (11, 12) de manière qu'elles s'étendent en hélice et définissent un couloir (13) de convoyage à courbure hélicoïdale et **en ce qu'**au moins une desdites glissières (11, 12) est une bande prédécoupée à plat avec une courbure calculée préalablement à la découpe pour que celle-ci puisse se mettre en hélice avec un écartement donné par rapport à l'autre glissière lors de sa fixation sur ledit châssis (10) fixe.

2. Elément de rail de convoyage selon la revendication 1, **caractérisé en ce que** ladite au moins une glissière (11, 12) est logée dans des moyens (50) de support prévus dans ledit châssis (10).

3. Elément de rail de convoyage selon la revendication 2, **caractérisé en ce que** ladite au moins une glissière (11, 12) est au moins partiellement de forme complémentaire auxdits moyens (50) de support.

4. Elément de rail de convoyage selon la revendication 2 ou 3, **caractérisé en ce que** lesdits moyens (50) de support comprennent un décrochement prévu dans au moins une branche (13a) du rail de convoyage.

5. Elément de rail de convoyage selon l'une quelconque des revendications 1 à 4, **caractérisé en ce que** la surface latérale à courbure interne (11b, 12b) de ladite au moins une glissière (11, 12) est en saillie par rapport à au moins une branche (13a) respective dudit rail de convoyage.

6. Elément de rail de convoyage selon l'une quelconque des revendications 1 à 5, **caractérisé en ce que** ladite au moins une glissière (11, 12) est fixée sur ledit châssis (10) à l'aide de moyens de vissage.

7. Elément de rail de convoyage selon l'une quelconque des revendications 1 à 6, **caractérisé en ce que** ladite au moins une glissière (11, 12) est un profilé en un matériau favorisant le glissement, tel que du métal chargé de PTFE.

8. Elément de rail de convoyage selon l'une quelconque des revendications 1 à 7, **caractérisé en ce qu'**il comprend des moyens aptes à limiter le balancement des objets convoyés.

9. Elément de rail de convoyage selon la revendication 8, **caractérisé en ce que** les moyens aptes à limiter le balancement des objets convoyés comprennent deux corps élancés, notamment des tubes (17, 18) cintrés vrillés, placés sous lesdites glissières (11, 12), et **en ce que** l'élément de rail comprend des moyens aptes à permettre de faire varier l'écartement entre lesdits corps élancés et/ou la distance entre lesdits corps élancés et les glissières.

10. Elément de rail de convoyage selon l'une quelconque des revendications 1 à 9, **caractérisé en ce qu'**il comprend des moyens aptes à assurer le maintien des objets convoyés en appui sur les glissières (11, 12).

11. Elément de rail de convoyage selon la revendication 10, **caractérisé en ce que** le châssis (10) comprend des arceaux (30) de montage d'une bande (34) supérieure placée sensiblement à l'aplomb dudit couloir (13) de convoyage et définissant un tronçon courbe d'appui pour les extrémités supérieures des objets à convoyer, notamment les buvants de récipients.

12. Elément de rail de convoyage selon l'une quelconque des revendications 1 à 11, **caractérisé en ce que** les glissières (11, 12) comportent des bords en vis-à-vis munis de gorges respectives dans chacune desquelles une bande de glissement est montée de manière amovible, notamment par encliquetage.

13. Dispositif d'alimentation en préformes d'une machine de soufflage, comprenant un élément de rail de convoyage selon l'une quelconque des revendications 1 à 12 et un système de démêlage des préformes, **caractérisé en ce que** ledit élément de rail de convoyage relie la sortie du système de démêlage à une portion rectiligne de rail de convoyage.

## Claims

1. A rail element for conveying objects, in particular containers such as bottles or preforms, in a suspended position, this conveying rail element comprising a frame (10) supporting two runners (11, 12) which are separated by a predefined distance, delimiting a conveying passageway (13) and which form lateral bearing surfaces for the objects being conveyed in said conveying passageway, in particular under-neck guides for containers, **characterized in that** said frame (10) supports said runners (11, 12) so that they are arranged in a helix and define a conveying passageway (13) with a helical curvature and **in that** at least one of said runners (11, 12) is a flat strip previously cut with a curvature which is pre-calculated prior to the cutting operation so that said strip can be arranged in a helix with a given spacing with respect to the other runner when it is fastened to the fixed frame (10).

2. The conveying rail element as claimed in claim 1, **characterized in that** said at least one runner (11, 12) is housed in support means (50) provided in said frame (10).

3. The conveying rail element as claimed in claim 2, **characterized in that** said at least one runner (11, 12) is at least partially complementary in shape with said support means (50).

4. The conveying rail element as claimed in claim 2 or 3, **characterized in that** said support means (50) take the form of an offset in at least one branch (13a) of the conveying rail.

5. The conveying rail element as claimed in any one of claims 1 to 4, **characterized in that** the internally curved lateral surface (11b, 12b) of said at least one runner (11, 12) projects from at least one respective branch (13a) of said conveying rail.

6. The conveying rail element as claimed in any one of claims 1 to 5, **characterized in that** said at least one runner (11, 12) is fastened to said frame (10) by way of screwing means.

7. The conveying rail element as claimed in any one of claims 1 to 6, **characterized in that** said at least one runner (11, 12) is a profile formed from a material which promotes sliding, such as PTFE-filled metal.

8. The conveying rail element as claimed in any one of claims 1 to 7, **characterized in that** it comprises means designed to limit the swinging of the conveyed objects.

9. The conveying rail element as claimed in claim 8, **characterized in that** the means designed to limit the swinging of the conveyed objects comprise two slender bodies, in particular spiral bent tubes (17, 18), placed below the runners (11, 12), and **in that** the rail element comprises means designed to vary the spacing between said slender bodies and/or the distance between said slender bodies and the runners.

10. The conveying rail element as claimed in any one of claims 1 to 9, **characterized in that** it comprises means designed to keep the conveyed objects bearing on the runners (11, 12).

11. The conveying rail element as claimed in claim 10, **characterized in that** the frame (10) comprises hoops (30) for mounting an upper strip (34) placed substantially in vertical alignment with the conveying passageway (13) and which defines a curved bearing section for the upper ends of the objects to be conveyed, in particular the mouth of containers.

12. The conveying rail element as claimed in any one of claims 1 to 11, **characterized in that** the runners (11, 12) comprise edges in face to face relationship provided with respective grooves in each of which a sliding strip is mounted removably, in particular by snap-fitting.

13. A device for feeding preforms to a blow-molding machine, comprising a conveying rail element as claimed in any one of the claims 1 to 12 and a system for segregating the preforms, **characterized in that** said conveying rail element connects the outlet of the segregating system to a rectilinear portion of the conveying rail.

## Patentansprüche

1. Transportschienenelement von hängenden Gegenständen, insbesondere von Behältern wie Flaschen oder Vorformlingen, wobei dieses Schienenelement für den Transport einen Rahmen (10) umfasst, der zwei Gleitschienen (11, 12) trägt, die einen bestimmten Abstand zueinander aufweisen, einen Transportgang (13) begrenzen und die seitlichen Auflageflächen für die Gegenstände bilden, die in dem Transportgang befördert werden, insbesondere Führungen für den Bereich unterhalb des Halses des Behälters, **dadurch gekennzeichnet, dass** der Rahmen (10) die Gleitschienen (11, 12) so trägt, dass sie als Spirale verlaufen und einen Transportgang (13) mit spiralförmiger Krümmung definieren, und **dadurch**, dass mindestens eine der Gleitschienen (11, 12) ein flacher zugeschnittener Streifen mit einer vor dem Zuschneiden berechneten Krümmung ist, damit sie bei der Befestigung an dem feststehenden Rahmen (10) die Form einer Spirale mit einem bestimmten Abstand zu der anderen Gleitschiene annehmen kann.

2. Transportschienenelement nach Anspruch 1, **dadurch gekennzeichnet, dass** die mindestens eine Gleitschiene (11, 12) in Support-Mitteln (50) aufgenommen ist, die in dem Rahmen (10) vorgesehen sind.

3. Transportschienenelement nach Anspruch 2, **dadurch gekennzeichnet, dass** die mindestens eine Gleitschiene (11, 12) zumindest teilweise komplementär zu den Support-Mitteln (50) geformt ist.

4. Transportschienenelement nach Anspruch 2 oder 3, **dadurch gekennzeichnet, dass** die Support-Mittel (50) einen Absatz umfassen, der in mindestens einem Stück (13a) des Transportschienenelements vorgesehen ist.

5. Transportschienenelement nach einem der Ansprüche 1 bis 4, **dadurch gekennzeichnet, dass** die Seitenfläche mit der inneren Krümmung (11b, 12b) der mindestens einen Gleitschiene (11, 12) gegenüber dem mindestens einen jeweiligen Stück (13a) des Transportschienenelements vorspringt.

6. Transportschienenelement nach einem der Ansprüche 1 bis 5, **dadurch gekennzeichnet, dass** die mindestens eine Gleitschiene (11, 12) mit Verschraubungsmitteln an dem Rahmen (10) befestigt ist.

7. Transportschienenelement nach einem der Ansprüche 1 bis 6, **dadurch gekennzeichnet, dass** die mindestens eine Gleitschiene (11, 12) ein Profil aus einem gleitfähigen Material ist, beispielsweise ein Metall mit PTFE.

8. Transportschienenelement nach einem der Ansprüche 1 bis 7, **dadurch gekennzeichnet, dass** es Mittel umfasst, die sich dafür eignen, die Schaukelbewegung der beförderten Gegenstände zu beschränken.

9. Transportschienenelement nach Anspruch 8, **dadurch gekennzeichnet, dass** die Mittel, die sich dafür eignen, die Schaukelbewegung der beförderten Gegenstände zu beschränken, zwei dünne Körper umfassen, insbesondere mit einem Knick versehene, gebogene Röhren (17, 18), die unter den Gleitschienen (11, 12) platziert sind, und **dadurch**, dass das Schienenelement Mittel umfasst, die sich dafür eignen, die Einstellung des Abstands zwischen den dünnen Körpern und/oder des Abstands zwischen den dünnen Körper und den Gleitschienen zu ermöglichen.

10. Transportschienenelement nach einem der Ansprüche 1 bis 9, **dadurch gekennzeichnet, dass** es Mittel umfasst, die sich dafür eignen, dafür zu sorgen, dass die beförderten Gegenstände auf den Gleitschienen (11, 12) aufliegen.

11. Transportschienenelement nach Anspruch 10, **dadurch gekennzeichnet, dass** der Rahmen (10) Montagebügel (30) für einen oberen Streifen (34) umfasst, der in etwa vertikal zu dem Transportgang (13) ausgerichtet platziert ist und einen gebogenen Abschnitt zum Anliegen der oberen Enden der zu befördernden Gegenstände definiert, insbesondere der Behälteröffnungen.

12. Transportschienenelement nach einem der Ansprüche 1 bis 11, **dadurch gekennzeichnet, dass** die Gleitschienen (11, 12) einander gegenüberliegende Ränder aufweisen, die jeweils mit Rillen versehen sind, in denen herausnehmbar, insbesondere durch Einrasten, jeweils ein Gleitstreifen montiert ist.

13. Vorrichtung zur Zufuhr von Vorformlingen zu einer Blasformmaschine, umfassend ein Transportschienenelement nach einem der Ansprüche 1 bis 12 und ein System zum Vereinzeln von Vorformlingen, **dadurch gekennzeichnet, dass** das Transportschienenelement den Ausgang des Vereinzelungssystems mit einem geraden Abschnitt der Förderschiene verbindet.
